# EUROPEAN PATENT APPLICATION

(11) **EP 4 582 192 A1**
(43) Date of publication of application: **09.07.2025**
(21) Application number: 23860231.2
(22) Date of filing: 25.08.2023
(51) Int. Cl.: B08B 5/00, B23K 26/142, B23K 26/16, B23K 26/36

(54) **COLLECTION DEVICE FOR LASER PROCESSING, LASER PROCESSING SYSTEM, AND LASER PROCESSING METHOD**

(30) Priority: 02.09.2022 JP 2022140143
(71) Applicant: Japanese Pulse Laser Development Association, Osaka-shi, Osaka 532-0025 (JP)
(72) Inventor: HIRAYAMA Takeo, Osaka-shi, Osaka 532-0025 (JP); SAMBA Kazunori, Osaka-shi, Osaka 532-0025 (JP); HOSODA Takeshi, Osaka-shi, Osaka 532-0025 (JP)
(74) Representative: Mewburn Ellis LLP
(86) International application number: PCT/JP2023/030820
(87) International publication number: WO 2024/048469

(57) **Abstract**

In order to avoid the configuration of a laser irradiation portion from becoming complicated because of coping with flying objects generated in surface processing by a laser light, a collecting apparatus for laser processing 20, comprises a collecting case 21 that is formed separate from a laser irradiation portion 32 for irradiating a laser light to a processing target surface 5 and separates the processing target surface 5 and the laser irradiation portion 32 in surface processing on land, the collecting case 21 having an opening portion formed in its one side and being provided with transparent panels 11 and 12 facing the opening portion 13, wherein surface processing becomes possible in which a laser light L is irradiated from the laser irradiation portion 32 to the processing target surface 5 through the transparent panels 11 and 12 when the collecting case 21 is in the installation state that the opening portion 13 is closed and the processing target surface 5 is covered and a suction device 22 for sucking flying objects generated in the surface processing by sucking air inside of the collecting case 21 in the installation state.

## Description

### TECHNICAL FIELD

The present invention relates to a collecting apparatus and the like for laser processing that is used for surface-processing by a laser light.

### BACKGROUND ART

Some of structures such as bridges or tanks have the surface of their base material such as a steel coated with a paint film. These kinds of structures need to have the surface repainted periodically. In repainting, the existing paint film must be removed beforehand. As a paint film removal technique, there are several techniques widely used such as chemical cleaning using an organic solvent or an acid, high pressure cleaning using water or the like or a surface processing method by sandblasting. However, recently, environmental regulations are becoming stringent. It is difficult for these techniques to clear or otherwise the stringent regulations. Under the circumstances, laser cleaning is attracting attention as a new paint film removal technique.

Patent Document 1 describes a laser paint film removal apparatus. The laser head of this laser paint film removal apparatus comprises an optical system for scanning an irradiation position of a laser light, a shielding member for protecting the optical system from flying objects generated from the surface of a structure, and an attachment portion configured to contact the surface of the structure and the like. The laser head is provided with a suction means. The flying objects generated from irradiation of the laser light is collected through a suction opening of the suction means. Part of the flying objects is attracted towards the optical system. In this laser head, the optical system is protected from the flying objects by the shielding member.

### [Prior Art Technical Document]

### [Patent Document]

[Patent Document 1] Japanese Patent No. 5574354

### DESCRIPTION OF THE INVENTION

### [Problem(s) to be Solved by the Invention]

Meanwhile, in the conventional apparatus, a shielding member is provided as means for preventing flying objects generated by surface processing (laser cleaning or the like) using a laser light from adhering to the optical system of the laser irradiation portion. However, by providing such a shielding member, the configuration of the laser irradiation portion becomes complicated.

The present invention was made considering such a situation and therefore its objective is to avoid the configuration of a laser irradiation portion from becoming complicated because of coping with flying objects generated in surface processing by a laser light.

### [Means for Solving the Problems]

To solve the above problems, the first invention is a collecting apparatus for laser processing for collecting flying objects generated in surface processing by a laser light, comprising: a collecting case that is formed separate from the laser irradiation portion for irradiating a laser light to a processing target surface and separates the processing target surface and the laser irradiation portion in surface processing on land, the collecting case having an opening portion formed in its one side and being provided with a transparent panel facing the opening portion, wherein surface processing becomes possible in which a laser light is irradiated from the laser irradiation portion to the processing target surface through the transparent panel when the collecting case is in an installation state that the opening portion is closed and the processing target surface is covered; a suction device for sucking the flying objects generated in the surface processing by sucking air inside of the collecting case in the installation state and adhering the collecting case to a closing face closing the opening portion.

The second invention is a collecting apparatus for laser processing according to the first invention, wherein the processing target surface is a wall surface; wherein the collecting case has an interior space in an hermetically sealed state in the installation state that the opening portion is closed by the processing target surface; and wherein the collecting case is fixed to the processing target surface without dropping down by only an adhesive force for adhering the collecting case to the processing target surface when the air inside of the collecting case in the installation state is sucked by the suction device.

The third invention is a collecting apparatus for laser processing according to the second invention, wherein the collecting case is provided with a magnet provided on an edge portion of the opening portion to assist the adhesive force.

The fourth invention is a collecting apparatus for laser processing according to the first invention, wherein the collecting case is provided with a vent opening for introducing outside air into the interior space in the surface processing.

The fifth invention is a collecting apparatus for laser processing according to the first invention, wherein the collecting case is formed to have a flat box shape and, in addition to a primary face facing the opening portion, a transparent panel is also provided on a side face extending from the periphery of the primary face toward the opening portion side.

The sixth invention is a collecting apparatus for laser processing according to the first invention, wherein the collecting case is provided with a gas introducing portion connected to a gas supplying device and a gas discharge port for discharging a gas supplied from the gas supplying device toward the processing target surface.

The seventh invention is a laser processing system comprising: the collecting apparatus for laser processing according to any one of the first to sixth inventions and a laser irradiation device provided with the laser irradiation portion and a laser oscillator for oscillating a laser light toward the laser irradiation portion.

The eighth invention is a laser processing system according to the seventh invention, further comprising a liquid discharge device for discharging a liquid to wet the processing target surface before removing a coating as the surface processing.

The ninth invention is a laser processing method for surface processing by a laser light comprising: a case installation step of installing a collecting case formed separate from a laser irradiation portion for irradiating a laser light to a processing target surface, the collecting case having an opening portion formed in its one side and a transparent panel provided to face the opening portion, wherein the processing target surface and the laser irradiation portion are separated by the collecting case and the surface processing becomes possible in which the laser light is irradiated to the processing target surface through the transparent panels from the laser irradiation portion by installing the collecting case in such a state that the opening portion is closed on land and the processing target surface is covered during surface processing on land; and a surface processing step that after the case installation step, the surface processing is conducted and flying objects inside the collecting case is sucked.

### [Effect of the Invention]

According to the first invention, surface processing becomes possible in which a laser light is irradiated from a laser irradiation portion separate from a collecting case to a processing target surface through a transparent panel when the collecting case is in the installation state that an opening portion is closed and the processing target surface is covered. Further, flying objects generated in the surface processing is sucked by a suction device sucking air inside of the collecting case in the installation state. Thus, almost no flying object do not reach the laser irradiation portion located outside of the collecting case. Therefore, the configuration of the laser irradiation portion is able to be prevented from becoming complicated because of coping with the flying objects.

According to the ninth invention, the case installation step is conducted in which a collecting case is installed in such a manner that an opening portion is closed and a processing target surface is covered so that the processing target surface is separated from a laser irradiation portion by the collecting case and a laser light is able to be irradiated from the laser irradiation portion separate from the collecting case to the processing target surface through a transparent panel. Then, in the surface processing step after the case installation step, surface processing by a laser light is conducted and flying objects inside of the collecting case are sucked by the suction device. Thus, almost no flying object reaches the laser irradiation portion located outside of the collecting case. Therefore, the configuration of the laser irradiation portion is able to be prevented from becoming complicated because of coping with the flying objects.

### BRIEF DESCRIPTION OF THE DRAWINGS

Fig. 1 is a schematic configuration of a laser processing system according to the present embodiment.
Fig. 2 is a perspective view of a collecting case for the laser processing system according to the present embodiment.
Fig. 3(a) is a top view of a collecting case for the laser processing system according to the present embodiment (top view of Fig. 2) and Fig. 3(b) is a bottom view of the collecting case.
Fig. 4(a) is a sectional view of the collecting case of Fig. 3(a) along A-A and Fig. 4(b) is a sectional view of the collecting case of Fig. 3 (a) along B-B.
Fig. 5(a) is a diagram showing the way the case installation step of a laser processing method according to the present embodiment is being conducted and Fig. 5(b) is a diagram showing the way the surface processing step is being conducted.
Fig. 6 is a diagram showing the way surface processing (laser cleaning) to the surface of a member housed in the collecting case 21 is being conducted.
Fig. 7(a) is a top view showing that a panel attachment portion is provided to the collecting case of the laser processing system according to the present embodiment, Fig. 7(b) is a sectional view of the collecting case of Fig. 7(a) along C-C and Fig. 7(c) is an enlarged view describing the switch between a first state and a second state with respect to the panel attachment portion.
Fig. 8(a) is a bottom view of a collecting case for the laser processing system according to the first variation to the present embodiment and Fig 8(b) is a sectional view of the collecting case of Fig. 8(a) along D-D.
Fig. 9(a) is a schematic configuration of a collecting case and the like for the laser processing system according to a second variation to the present embodiment, and Fig. 9(b) is a diagram showing the way the surface processing step is being conducted using the collecting case of Fig. 9(a).
Fig. 10 is a diagram of a collecting case of the laser processing system according to a third variation to the present embodiment as viewed from aside to show the way a liquid spraying step is being conducted.
Fig. 11 is a picture confirming that the surface of a base material is cleaned by laser cleaning after wetting the processing target surface before laser-cleaning.
Fig. 12 is a diagram, as viewed from atop, of a collecting case for the laser processing system according to a fourth variation to the present embodiment is installed on a wall surface.

### MODES FOR CARRYING OUT THE INVENTION

The embodiment of the present invention will be described in detail by referring to the drawings. For avoidance of doubt, the embodiment hereafter is only an example of the present invention, and is not intended to be limiting the present invention, its application or the scope of application of the present invention.

### [Configuration of the laser processing system]

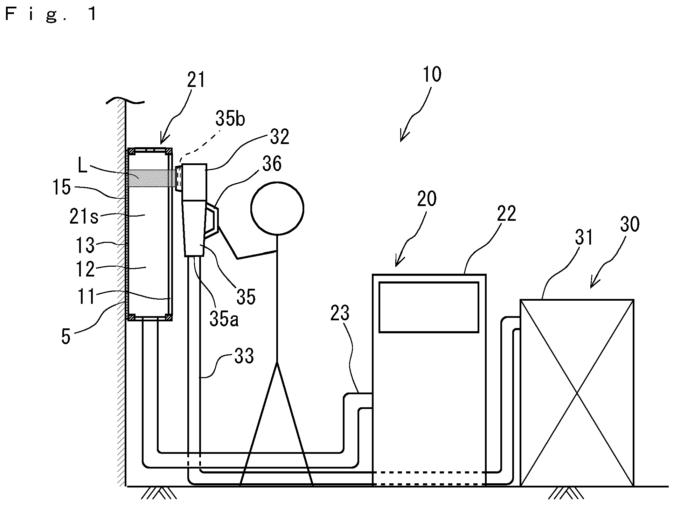

The present embodiment is a laser processing system 10 that is used for laser cleaning (surface processing by a laser light) to remove a coating (a paint film, rust, asbestos or sodium or the like) on the surface of a base material of a structure or the like. The laser processing system 10, as shown in Fig. 1, comprises a collecting apparatus 20 for laser processing and a laser irradiation device 30. The collecting apparatus 20 for laser processing comprises a collecting case 21 installed to cover a processing target surface 5 of a structure such as bridges or tanks, elevated railroads/roads or mechanical equipment, and the laser irradiation device 30 comprises a laser irradiation head 32 separate from the collecting case 21. In the laser processing system 10, a laser irradiation head 32 is able to be moved freely by an operator or a manipulator outside of the collecting case 21 covering the target surface 5 so that a laser light L is irradiated to the processing target surface 5 through transparent panels 11 and 12 of the collecting case 21. In addition, the laser processing system 10 may also be used for a different surface processing by a laser light (for example, laser welding) from laser cleaning. Now, the laser processing system will be described in more detail.

### <Configuration of the collecting apparatus for laser processing>

The collecting apparatus 20 for laser processing, as shown in Fig. 1, comprises a collecting case 21 having an opening portion 13 formed in its one side and provided with transparent panels 11 and 12 facing the opening portion 13, and a suction device 22 connected to the collecting case 21 through a suction hose 23. The suction device 22 operates by being supplied with electricity from an electricity source (not shown) such as a power generator. As the suction device 22, a vacuum pump may be used.

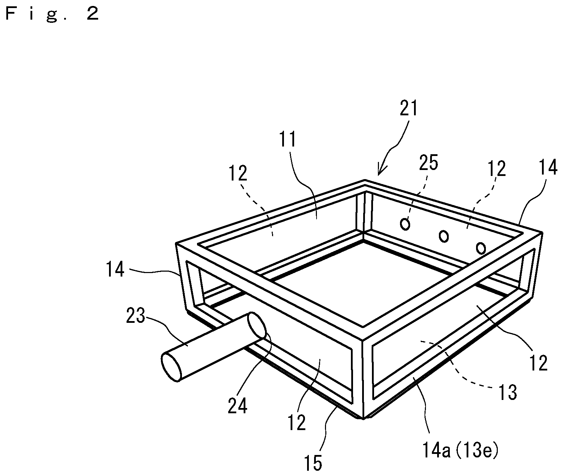

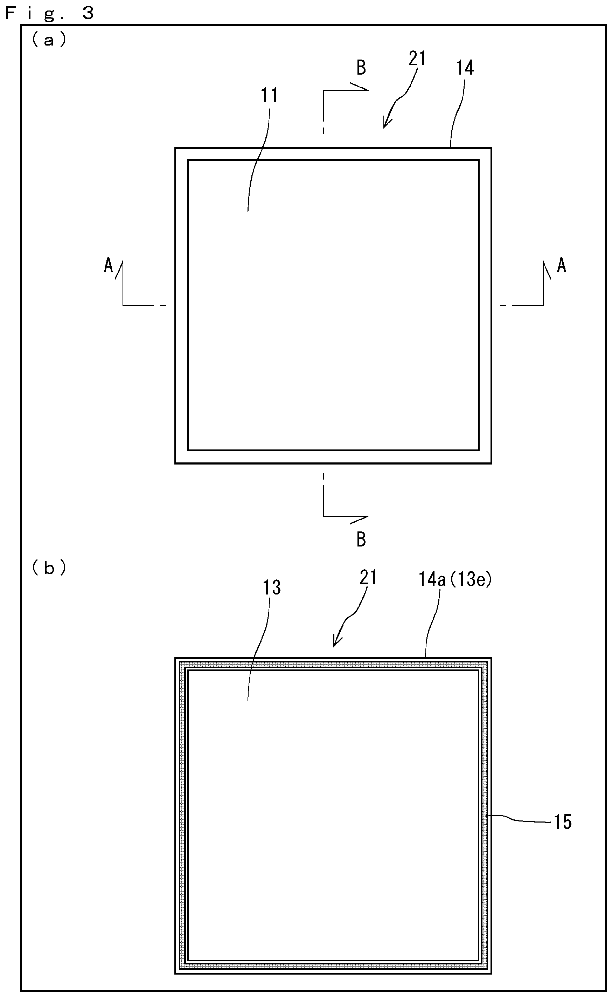

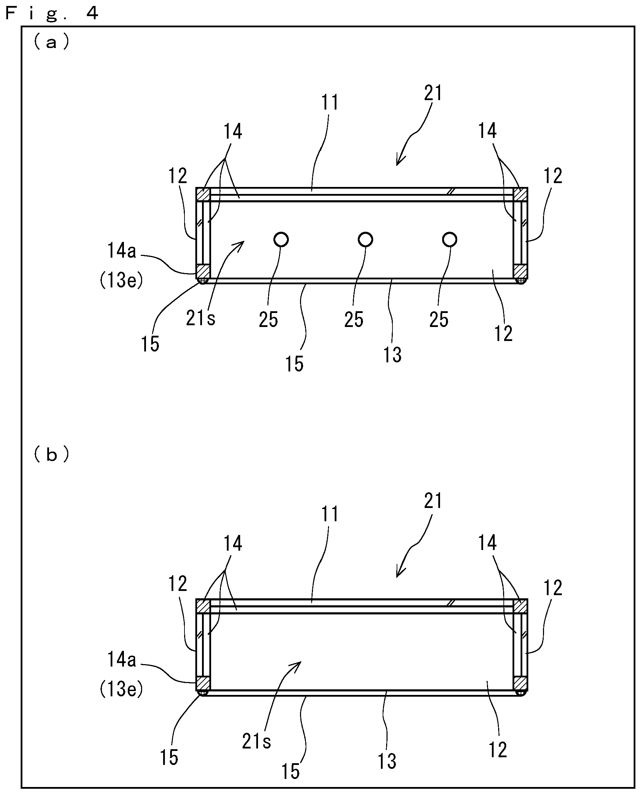

The collecting case 21 is a case that is formed separate from a laser irradiation head (laser irradiation portion) 32 and separates the processing target surface 5 and the laser irradiation head 32 in laser cleaning on land. The collecting case 21 as shown in Figs. 2 to 4, is formed to have a substantially rectangular parallelepiped shape with an opening portion 13 in its one side. In the collecting case 21, five faces except for the opening portion 13 side face is formed of transparent panels 11 and 12. The collecting case 21 consists of a primary panel 11 provided on a primary face facing the opening portion 13 and side panels 12 provided on four side faces extending from the perimeter of the primary face toward the opening portion 13 side. Hereinafter, based on the way how the collecting case 21 is installed as shown in Fig. 2, the primary panel 11 side may be called "upper side" and the opening portion 13 side may be called "bottom side".

To describe the shape of the collecting case 21 more specifically, it is formed flat. The respective side panels 12 extend substantially vertically from the respective four sides of the primary face. The height of the respective side panels 12 is shorter than any side of the primary panel 11, and the area of the primary panel 11 is the largest among the five transparent panels 11 and 12. The size of the primary face of the collecting case 21 may be that the respective sides thereof are 25cm or more and 100cm or less (preferably 50cm or less). Further, the shape of the primary face of the collecting case 21 may be square, rectangular or non-tetragon.

In the collecting case 21, the respective transparent panels 11 and 12 are attached to the rectangular portion of a frame 14 having a substantially rectangular-parallelopiped shape. In the collecting case 21, an opening-side frame 14a forming an edge portion 13e of the opening portion 13 is provided with a flexible seal member 15. The seal member 15 is provided all around the entire periphery of the opening side frame 14a. The seal member 15 may be made of rubber or the like.

The collecting case 21 is provided with an exit opening 24 to which a suction horse 23 is connected. According to the present embodiment, the exit opening 24 is formed in one of the side panels 12 of the collecting case 21. In addition, the exit opening 24 may be disposed in the primary panel 11.

The collecting case 21 has vent openings 25 for introducing air from outside into an interior space 21s in laser cleaning. According to the present embodiment, a plurality of the vent openings 25 are provided in the side panel 12 facing the side panel 12 provided with the exit opening 24. The plurality of vent openings 25 are disposed at intervals along the longitudinal direction of the side panel 12. The respective vent openings 25 are small holes as compared with the exit opening 24. To the respective vent openings 25 are connected no pipe, and air near the outer surface of the transparent panels 11 and 12 is introduced through the respective vent openings 25. In addition, the plurality of vent openings 25 may be split and disposed separately in the plurality of side panels 12. Further, the vent openings 25 are disposed in the primary panel 11 or gaps formed by partially cutting out the seal member 15 may serve as the vent openings 25.

When the collecting case 21 is in such a installation state that the opening portion 13 is closed and the processing target surface 5 is covered, surface processing becomes possible in which a laser light is irradiated from the laser irradiation head 32 to the processing target surface 5 through the transparent panels 11 and 12. For example, supposing the processing target surface 5 is a substantially flat wall surface, a closing surface closing the opening portion 13 is the processing target surface 5. When installing the collecting case 21, by contacting the edge portions 13e of the opening portion 13 to the processing target surface 5 to make the entire periphery of the seal member 15 adhere to the processing target surface 5, so that the interior space 21s of the collecting case 21 is in a sealed state. In addition, the term "sealed state" in the present specification includes such a state that a small amount of air flows inside and outside of the collecting case 21 through the respective vent openings 25 having a small diameter.

The suction device 22 is used to put the interior space 21s of the collecting case 21 into a substantially vacuum state in installing and fixing the collecting case 21 to the processing target surface 5. Further, the suction device 22 is also used to suck flying objects S inside the collecting case 21 in laser cleaning.

For example, where the processing target surface 5 is a wall surface extending up and down (for example, a vertical surface), in installing the collecting case 21 to the processing target surface 5, the suction device 22 sucks air inside of the collecting case 21 with the edge portions 13e of the opening portion 13 contacting the processing target surface 5 to put the interior space 21s into a vacuum state, so that the collecting case 21 does not drop down by gravity and is fixed to the processing target surface 5. Thereby, an adhesive force P is generated to adhere the collecting case 21 to the processing target surface 5. Namely, when the suction device 22 sucks air inside of the collecting case 21, the pressure inside the interior space 21s of the collecting case 21 is reduced, putting the interior space 21s of the collecting case 21 into a substantially vacuum state, thereby obtaining such an adhesive force P as to prevent the collecting case 21 from dropping down by gravity. The collecting apparatus 20 for lase processing is configured such that the collecting case 21 is fixable to a vertical wall surface by only this adhesive force P.

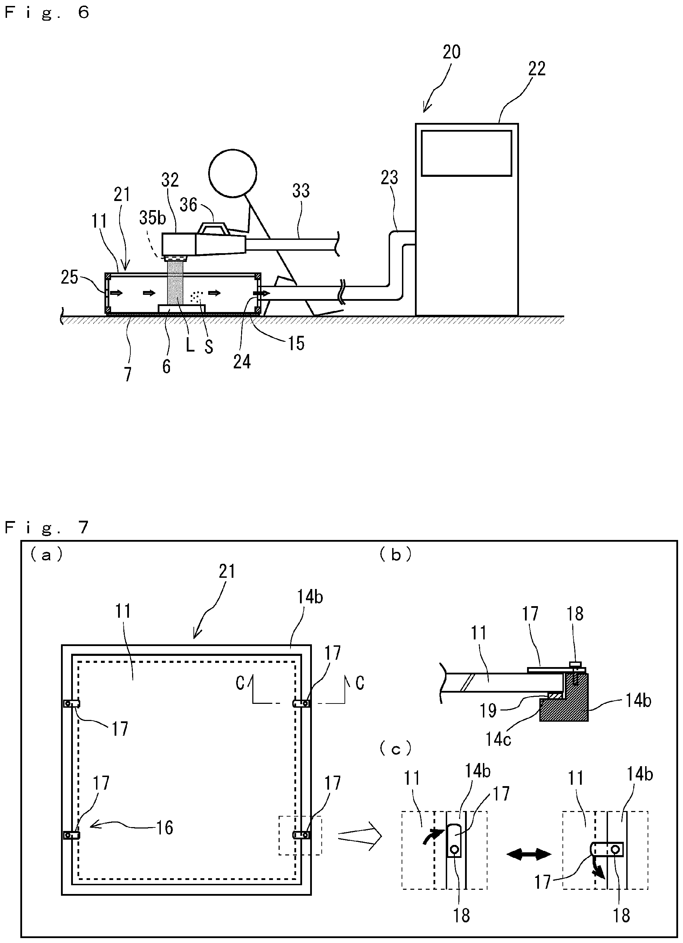

In addition, the collecting apparatus for laser processing 20 according to the present embodiment may be used not only where the processing target surface 5 is a wall surface, but also where it is a bottom surface or an oblique surface (see Fig. 6). In this case, too, by sucking air inside of the collecting case 21, the adhesive force P is generated to make the collecting case 21 adhere to the processing target surface 5, so that the collecting case 21 is fixed to the processing target surface 5.

### <Configuration of the laser irradiation device>

The laser irradiation device 30 comprises, as shown in Fig. 1, a laser oscillator 31 for oscillating a laser light and a laser irradiation head 32 for irradiating a laser light L oscillated from the laser oscillator 31. The laser irradiation device 30 operates by being supplied with electricity from a power source such as an electric generator (not shown). The laser oscillator 31 is a type of pulse oscillator that oscillates a laser light in a predetermined pulse width. The laser oscillator 31 is connected to the laser irradiation head 32 through a transmission line 33 such as a fiber cable for laser transmission.

The laser irradiation head 32 comprises a casing 35 provided with a connection port 35a to which the transmission line 33 is connected and an emitting porthole 35b (for example, a lens) for emitting a laser light L supplied from the laser oscillator 31 through the transmission line 33. The casing 35 contains a scanning optical system for scanning the laser light L a focusing optical system for focusing the laser light L onto the processing target surface 5 and the like (not shown). Further, on the outer surface of the casing 35 is provided a handle 36 for an operator to grip, an operation switch (not shown) and the like.

### [The way to use the laser processing system]

Next, description will be made with respect to a laser cleaning method (a laser processing method for conducting a surface processing by a laser light) for removing a coating on the processing target surface 5 (such as paint film, rust, asbestos or sodium) by using the laser processing system 10. In addition, a planned processing region to remove a coating thereon is a metal surface as a magnetic material.

The laser processing system 10 is transported by, for example, a vehicle and then brought in a processing work site. Then, before starting laser-cleaning on land, a case installation step is conducted in which the collecting case 21 is installed in such a manner that the opening portion 13 is closed and the processing target surface 5 in the planned processing region is covered. In addition, before or during the case installation step, the suction horse 23 extending from the suction device 22 is connected to the exit opening 24 of the collecting case 21.

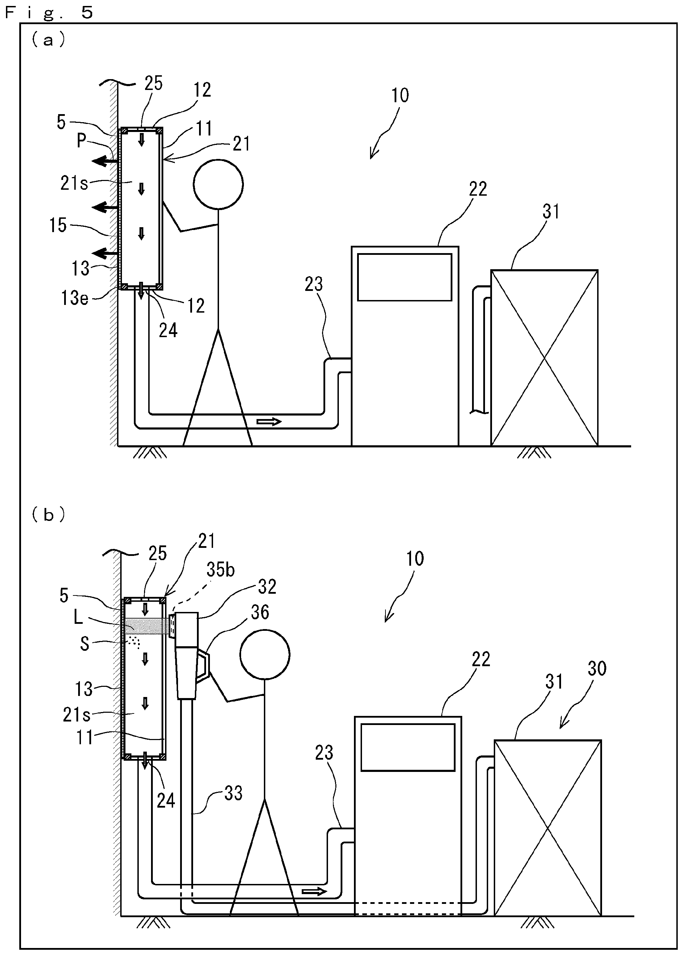

In the case installation step, an operator lifts the collecting case 21 to direct the opening portion 13 side to the processing target surface (a wall surface or the like) 5, and as shown in Fig. 5(a), presses the edge portion 13e of the opening portion 13 against the processing target surface 5 so that the opening portion 13 is closed by the processing target surface 5. By thus pressing, the interior space 21s of the collecting case 21 becomes hermetically sealed. Under this state, the suction device 22 is started to operate so as to suck the air inside of the collecting case 21. Then, by the adhesive force P obtained by this suction, the entire periphery of the seal member 15 adheres to the processing target surface 5. The adhesive force P functions as a retaining force for preventing the collecting case 21 from dropping down by gravity so that the collecting case 21 is fixed to the processing target surface 5. In this state, even if the operator lets go of the collecting case 21, the collecting case 21 is retained at a location above the ground. Thereby, the case installation step is completed. When the case installation step is completed, the processing target surface 5 and the laser irradiation head 32 are separated from each other by the collecting case 21 so that a laser light may be irradiated to the processing target surface 5 from the laser irradiation head 32 through the transparent panels 11 and 12.

Next, a surface processing step is conducted in which the laser light L is irradiated to the processing target surface 5 to remove a coating thereon. In the surface processing step, in addition to the laser irradiation device 30, the suction device 22 is operated without pause from the start of its operation in the case installation step. In the surface processing step, the laser light L is irradiated from the laser irradiation head 32 to the processing target surface 5 through the transparent panels 11 and 12, and the flying objects S inside of the collecting case is sucked by the suction device 22. In addition, in the surface processing step, the above-mentioned adhesive force P works too, but which is not shown in Fig. 5(b).

Specifically, in the surface processing step, the operator starts operating the laser head irradiation device 30 with the emitting porthole 35b of the laser irradiation head 32 being directed to the processing target surface 5 through the transparent panels 11 and 12. Then, as shown in Fig. 5(b), the laser light L emitted from the emitting porthole 35b of the lase irradiation head 32 passes through the transparent panels 11 and 12 and is irradiated to the processing target surface 5. In addition, in the laser irradiation head 32, for example, the scanning optical system operates for the laser light L to scan the processing target surface 5 linearly. The scanning speed of the laser light L is fast. Therefore, the laser light L emitted from the emitting porthole 35b is visually recognized as a sheet-shaped laser light L. The processing target surface 5 has the coating removed by the laser light L.

As the coating is removed, flying objects S such as fume is generated. In the surface processing step, since the suction device 22 is operated, the flying objects S is sucked by the suction device 22 through the exit opening 24. Then, outside air is introduced into the collecting case 21 through the vent openings 25. Therefore, airflows heading for the exit opening 24 increase inside of the collecting case 21, whereby the flying objects S is effectively sucked by the suction device 22. Especially, according to the present embodiment, the side panel 12 provided with the exit opening 24 and the side panel 12 provided with vent openings 25 face each other, so that the airflows having a sufficient flow rate are generated over a wide area in the interior space 21s for the suction device 22 to suck the flying objects S effectively.

In addition, in the surface processing step, the operator is able to remove the coating over the almost entire surface of the processing target surface 5 inside the collecting case 21 by moving the emitting porthole 35b of the laser irradiation head 32 to change an irradiation point of the laser light L on the processing target surface 5. Since the primary panel 11 has a relatively large area, the coating over a wide area is able to be removed. From the outside of the collecting case 21, the almost entire surface of the processing target surface 5 inside the collecting case 21 is able to be visually recognized, thereby working efficiency being enhanced.

When the removal of the coating inside the collecting case 21 is completed, a detaching step is conducted in which the collecting case 21 is detached from the processing target surface 5. Specifically, with the collecting case being retained by the operator, the suction of air into the collecting case 21 by the suction device 22 is stopped. Then, as air flows from the vent opening 25, the pressure in the interior space 23s increases, the adhesive force P weakens. The operator detaches the collecting case 21 from the processing target surface 5. Then, the case installation step is conducted to cover another region in the planned processing region as the processing target surface 5, and the surface processing step is conducted after the installation step. In the processing work site, the case installation step, the surface processing step and the case detaching step are repeatedly conducted in this order. In addition, the laser processing method is able to be used for a different surface processing from laser cleaning (for example, laser welding).

Further, the collecting apparatus for laser processing 20 is able to be used to remove a coating (paint film, rust, asbestos, sodium or the like) covering the surface of a member 6 of such a size that the collecting case 21 is able to house (parts of equipment, apparatus or the like). In this case, as shown in Fig. 6, the collecting case 21 covers the member 6 with the opening portion 13 facing downwardly. In this case, the closing surface closing the opening portion 13 is the installation surface 7 (worktable, ground or the like) on which the member 6 is placed. In this state, the laser light L emitted from the emitting porthole 35b of the laser irradiation head 32 passes through the primary panel 11 and is irradiated to the processing target surface 5.

### [Effect and the like of the present embodiment]

According to the present embodiment, in the installation state in which the opening portion 13 is closed and the processing target surface 5 is covered, surface processing becomes possible in which the laser light L is irradiated through the transparent panels 11 and 12 to the processing target surface 5 from the laser irradiation head 32 separate from the collecting case 21. Further, by sucking the air inside of the installed collecting case 21 with the use of the suction device 22, the flying objects S generated in laser cleaning by irradiating a laser light to the processing target surface 5 are sucked. Therefore, almost no flying object S reaches the laser irradiation head 32 of the collecting case 21. Therefore, it is possible to prevent the configuration of the laser irradiation head 32 from becoming complicated because of coping with the flying objects S.

Further, according to the present embodiment, since the side faces of the collecting case 21 are formed of the transparent panels 12, the laser light L is able to be irradiated to the processing target surface 5 through the side face panels 12. Therefore, where there is a protrusion such as a bolt on the processing target surface 5 inside of the collecting case 21, by irradiating the laser light L to the side face of the protrusion, the coating on the side face may be able to be readily removed.

Further, according to the present embodiment, because of using the laser irradiation head 32 separate from the collecting case 21, it is possible to readily adjust a focus of the laser light L to the surface of the processing target surface 5 by moving the laser irradiation head 32 toward or away from the processing target surface 5. For example, where there is a protrusion such as a bolt on the processing target surface 5 inside the collecting case 21, the laser light L is able to be readily focused on the surface of the protrusion. Therefore, cleaning quality is able to be enhanced.

Further, according to the present embodiment, although the flying objects S is sucked by the suction device 22, there is possibility that the flying objects S may adhere to the transparent panels 11 and 12. However, since the transparent panels 11 and 12 have a large surface area, the transmittance of the laser light L through the transparent panels 11 and 13 does not easily decrease even though the flying objects S adhere to or deposit on the transparent panels 11 and 12. Therefore, it is possible to avoid the strength of the laser light L reaching the processing target surface 5 from decreasing due to the deposit of the flying objects S.

Further, according to the present embodiment, since the collecting case 21 is provided with the vent openings 25, it is possible to prevent the pressure inside of the collecting case 21 from too much decreasing when sucking the air inside of the collecting case 21 with the interior space 21s hermetically sealed. Thereby, it is possible to prevent the transparent panels 11 and 12 (mainly the primary panel 11) from much bending inwardly or the transparent panels 11 and 12 from being damaged by such bending. Furthermore, since the collecting case 21 is provided with the vent openings 25, it is possible to readily detach the collecting case 21 in the case detaching step.

In addition, a high strength material is able to be used for the transparent panels 11 and 12 to prevent the above-mentioned damage. Further, a higher strength material may be used for the primary panel 11 than that for the side panel 12. Still further, to prevent the inward bending of the primary panel 11, a support member (beam member) extending across the primary panel 11 with its opposite ends fixed to the frame 14 may be provided. The support member is provided to contact the interior surface of the primary panel 11. In this case, a transparent material may be used for the support member so that the operator may visually recognize the processing target surface 5 readily.

Yet further, since the laser light L emitted from the laser irradiation head 32 is a high-intensity light, as the laser light L passes through the transparent panels 11 and 12, the temperature of the transparent panels 11 and 12 is elevated. Therefore, a material having a high transparency and a high heat resistance is able to be used for the transparent panels 11 and 12.

Furthermore, in order to be able to replace the transparent panels 11 and 12 when they are deteriorated by the above-mentioned bending or the elevation of the temperature or when the transparency of the laser light L decreases by the deposition of the flying objects S thereon, the collecting case 21 may be provided with a panel attachment portion 16 capable of switching, by rotating, sliding or the like, between a first state that the transparent panels 11 and 12 is attachable to and detachable from the collecting case 21 and a second state that the transparent panels 11 and 12 are retained. The panel attachment portion 16 shown in Fig. 7 is provided for the primary panel 11. The panel attachment portion 16 is comprised by a plurality of latches 17 that are rotatably provided on the primary face frame 14b of the frame 14 that surrounds the primary panel 11. The plurality of latches 17, as shown in Fig. 7(a), are circumferentially disposed at intervals on the primary face side frame 14b (see Fig. 7(b)). The respective latches 17 are a small plate-shaped piece and are rotatably attached to the primary face side frame 14b by pins 18 (see Fig. 7(b)). The primary face side frame 14b has its inner peripheral side dented to form a mounting face 14c for the primary panel 11. In replacing the primary panel 11, the latches 17 are rotated to the first state (see the left figure of Fig. 7(c)) that the latches 17 do not overlap the primary panel 11. Thereby, the used primary panel 11 is detached, and a new primary panel 11 is mounted on the mounting face 14c. Then, the latches 17 are rotated to the second state (the right figure of Fig 7(c)) that the latches 17 overlap the primary panel 11. Thereby, the primary panel 11 is retained by the respective latches 17. In addition, an elastic member 19 such as rubber may be provided on the mounting face 14c as shown in Fig 7(b). Further, the transparent panels 11 and 12 may be detachably provided to the collecting case 21 by a fastening member such as a screw.

### [First variation to the present embodiment]

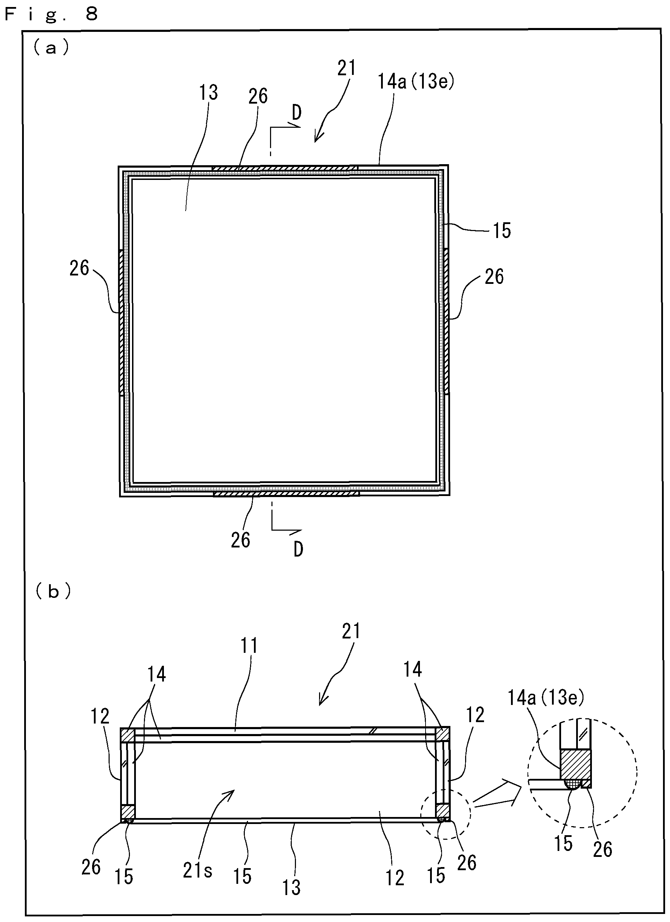

According to the present variation, as shown in Fig. 8, the collecting case 21 comprises a second fixing portion as an element for fixing the collecting case 21 to the closing face closing the opening portion 13 that generates an adhesive force by another technique, supposing that the suction of air inside of the collecting case 21 by the above-mentioned adhesive force P caused by the suction device 22 is a first fixing portion. The second fixing portion is, for example, a magnet 26 provided on the edge portion 13e (the opening side frame 14a) of the opening portion 13.

In this case, the magnet 26 to be used may be stick-shaped, for example. The magnet 26 is provided along each side of the opening side frame 14a. In this case, as shown in Fig. 8, the magnet 26 is disposed outside of the seal member 15 on the bottom face of the opening side frame 14a, but may be disposed inside of the seal member 15. Further, as the seal member 15, a rubber magnet may be used to serve as the magnet 26.

According to the present variation, like the above-mentioned embodiment, the collecting apparatus for laser processing 20 is configured such that the collecting case 21 is fixable to the vertical wall surface by only the above-mentioned adhesive force P and comprises the magnet 26 supplementally. And the collecting case 21 is fixable to a vertical magnetic material wall surface by only the magnetic force of all the magnetics 26 without dropping down. Therefore, when the suction device 22 stops operation due to outage or breakdown, the collecting case 21 is able to be prevented from dropping down. In addition, as the magnetic 26, an electromagnet may be used. In this case, electricity may be supplied to the electromagnet from a different power source from that for the suction device 22. Further, as the second fixing portion, a suction cup, a vacuum pad (adhesive pad) or the like may be used.

Further, it is possible to acquire the force to fix the collecting case 21 to the vertical magnetic material wall surface by both the adhesive force P of the first fixing portion and the adhesive force of the second fixing portion, not by either of the adhesive force P of the first fixing portion and the adhesive force of the second fixing portion.

### [Second variation to the present embodiment]

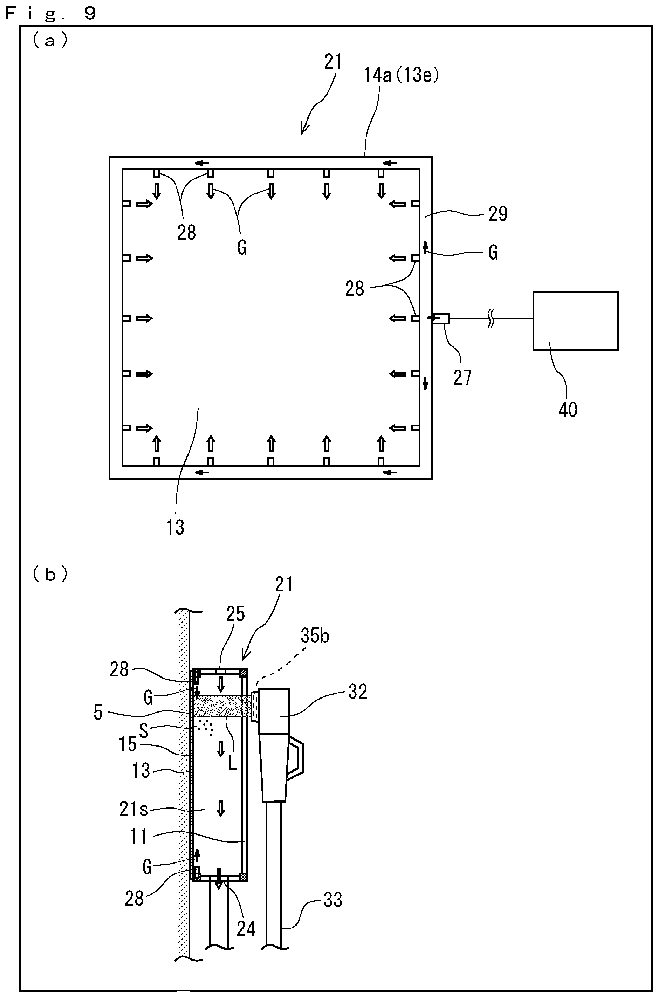

According to the present variation, as shown in Fig. 9(a), the collecting case 21 comprises a gas introducing portion 27 connected to a gas supplying device 40 for supplying a gas G (carbon dioxide, nitrogen or the like) such as a cooling gas, a nonflammable gas or an inert gas and gas discharge ports 28 for discharging the gas G supplied from the gas introducing portion 27 toward the processing target surface 5. The gas discharge port 28 is formed of a nozzle. In addition, according to the present variation, the vent openings may be omitted.

For example, the opening side frame 14a is formed to have a tubular shape, so that the inside thereof may serve as a flow path 29 for the gas G. In the outer face of the opening side frame 14a is provided the gas introducing portion 27. Further, in the inner surface of the opening side frame 14a is provided the gas discharge ports 28. According to the present variation, a plurality of the gas discharge ports 28 are provided in the opening side frame 14a. In this case, as shown in Fig. 9(a), the gas discharge port 28 may be provided on each side of the opening side frame 14a or it may be provided on some of the sides thereof.

According to the present variation, during the surface processing step, the gas supplying device 40 is operated, so that the gas G is supplied from the gas supplying device 40 to the gas introducing portion 27. In the collecting case 21, the gas G supplied to the gas introducing portion 27 passes through the flow path 29 inside of the opening side frame 14a and is discharged from the respective gas discharge ports 28 and supplied to the processing target surface 5 (see Fig 9(b)). Thereby, even though there is a risk of fire in surface processing by a laser light, fire is able to be prevented. In addition, an operator is omitted in Fig 9(b).

### [Third variation to the present embodiment]

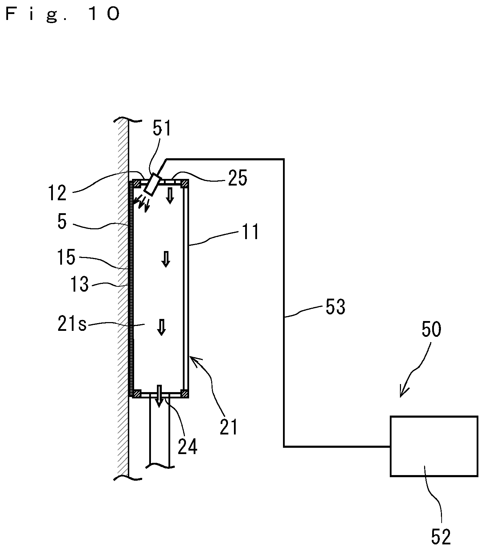

According to the present variation, as shown in Fig. 10, the laser processing system 10 further comprises a liquid discharge device 50 for discharging a liquid to wet the processing target surface 5. For example, the liquid discharge device 50 comprises a liquid discharge port 50 provided in the collecting case 21 and a liquid supplying device 52 for supplying a liquid (water, aqueous solution or the like) to the liquid discharge port 51. The liquid discharge port 51 is comprised by a spray nozzle from which the liquid is sprayed. The liquid discharge port 51 is connected to the liquid supplying device 52 through a pipe 53. In addition, the gas discharge port 28 of the second variation is able to be used also as a liquid discharge port, and the liquid discharge port 51 of the present variation is able to be used also as a discharge port for a cooling gas, a nonflammable gas or an inert gas.

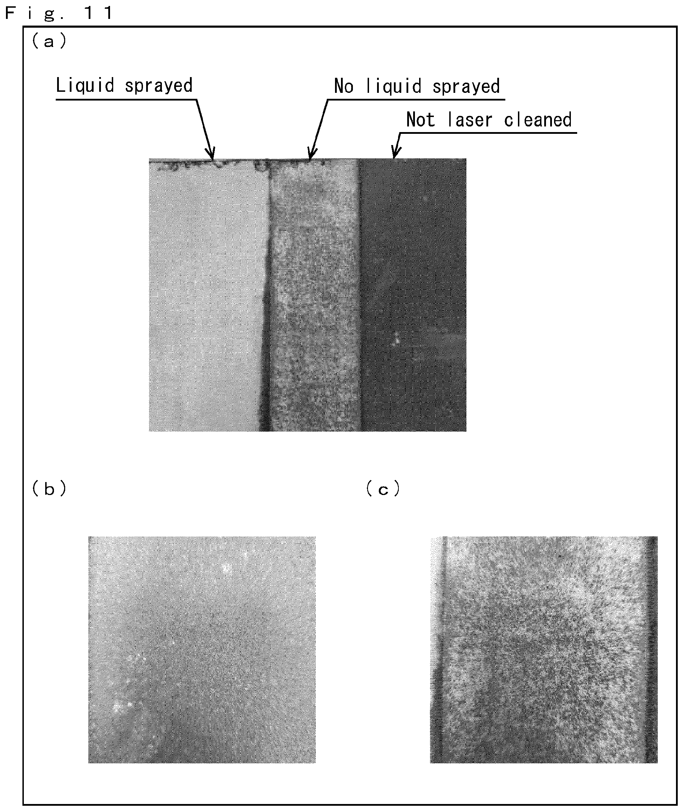

Here, the present inventors have found that the surface of a base material becomes cleaner where the processing target surface 5 (the surface of such coating as paint film, rust, asbestos, sodium or the like) is wetted before laser cleaning as compared with the case where the processing target surface 5 is not wetted. The present inventors have conducted a comparative test between a case that the processing target surface 5 covered with rust (Case 1) is wetted by a liquid as shown in the rightmost test piece in Fig. 11(a) and a case that it was not wetted (Case 2). For the comparative test, water was used as the liquid. Fig 11(a) shows a picture in which, from the left side, a test piece of the base material of Case 1 produced by wetting and then laser-cleaning the processing target surface 5, a test piece of the base material of Case 2 produced by lase-cleaning the processing target surface 5 without wetting and a test piece of a non-laser-cleaned base material are arranged. Fig. 11(b) is an enlarged photo of the test piece of Case 1. Fig. 11 (c) is an enlarged photo of the test piece of Case 2. Comparing Fig 11(b) and Fig 11(c), the surface of the former is apparently clean, and the surface of the latter has noticeable scars. In addition, the present inventors have obtained similar results in case of using a different aqueous solution from water.

According to the present variation, a liquid spraying step is conducted in which the processing target surface 5 inside the collecting case 21 is wetted by spraying a liquid from the liquid discharge port 51 after the case installation step and before the surface processing step. Thereby, since the surface of the base material becomes clean after laser-cleaning, the quality of surface preparation is enhanced.

In addition, the liquid spraying step may be conducted by using the liquid discharge device 50 separate from the collecting case 21 without providing the collecting case 21 with the liquid discharge port 51 of the liquid discharge device 50. In this case, the liquid spraying step is conducted before the case installation step.

### [Forth variation to the present embodiment]

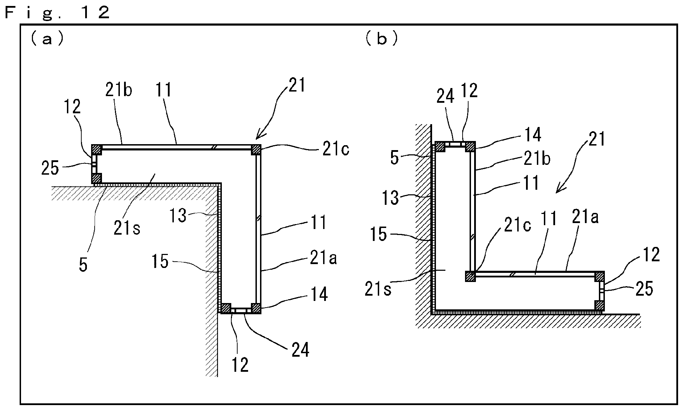

According to the present variation, the collecting case 21 has a L-letter shape as shown in Fig. 12(a) when viewed from above. The collecting case 21 is used where the processing target surface 5 is a connecting portion in which two wall surfaces intersect at a certain angle (90 degree, for example), a square column or the like. In addition, the intake horse 23 is omitted in Fig. 12.

The collecting case 21 comprises a first case portion 21a having the opening portion 13 closed by the processing target surface 5 of one wall surface, a second case portion 21b having the opening portion 13 closed by the processing target surface 5 of the other wall surface and a connecting portion 21c for connecting the first case portion 21a and the second case portion 21b.

In addition, in Fig. 12(a), the opening portion 13 is provided inside of the L-letter shape. However, as shown in Fig. 12 (b), the opening portion 13 may be provided in the outside of the L-letter shape. Further, the collecting case 21 may be configured such that the transparent panels 11 and 12 are provided on the bellows-shaped case having the opening portion 13 in its one side, so that the collecting case 21 may be deformed to accord to the shape of the processing target surface 5.

### INDUSTRIAL APPLICABILITY

The present invention is applicable to a collecting apparatus for laser processing or the like to be used for surface processing by a laser light.

### DESCRIPTION OF REFERENCE CHARACTERS

5 Processing target surface
10 laser processing system
11 Primary panel (transparent panel)
12 Side panel (transparent panel)
13 Opening portion
13e Edge portion of the opening portion
20 Collecting apparatus for laser processing
21 Collecting case
22 Suction device

## Claims

1. A collecting apparatus for laser processing for collecting flying objects generated in surface processing by a laser light, comprising:
a collecting case that is formed separate from a laser irradiation portion for irradiating a laser light to a processing target surface and separates the processing target surface and the laser irradiation portion in surface processing on land, the collecting case having an opening portion formed in its one side and being provided with a transparent panel facing the opening portion, wherein surface processing becomes possible in which a laser light is irradiated from the laser irradiation portion to the processing target surface through the transparent panel when the collecting case is in an installation state that the opening portion is closed and the processing target surface is covered;
a suction device for sucking the flying objects generated in the surface processing by sucking air inside of the collecting case in the installation state and adhering the collecting case to a closing face closing the opening portion.

2. The collecting apparatus for laser processing according to claim 1, wherein the processing target surface is a wall surface; wherein the collecting case has an interior space in a hermetically sealed state in the installation state that the opening portion is closed by the processing target surface; and wherein the collecting case is fixed to the processing target surface without dropping down by only an adhesive force for adhering the collecting case to the processing target surface when the air inside of the collecting case in the installation state is sucked by the suction device.

3. The collecting apparatus for laser processing according to claim 2, wherein the collecting case is provided with a magnet provided on an edge portion of the opening portion to assist the adhesive force.

4. The collecting apparatus for laser processing according to claim 1, wherein the collecting case is provided with a vent opening for introducing outside air into the interior space in the surface processing.

5. The collecting apparatus for laser processing according to claim 1, wherein the collecting case is formed to have a flat box shape and, in addition to a primary face facing the opening portion, a transparent panel is also provided on a side face extending from the periphery of the primary face toward the opening portion side.

6. The collecting apparatus for laser processing according to claim 1, wherein the collecting case is provided with a gas introducing portion connected to a gas supplying device and a gas discharge port for discharging a gas supplied from the gas supplying device toward the processing target surface.

7. A laser processing system comprising:
the collecting apparatus for laser processing according to any one of claims 1 to 6; and a laser irradiation device provided with the laser irradiation portion and a laser oscillator for oscillating a laser light toward the laser irradiation portion.

8. The laser processing system according to claim 7, further comprising a liquid discharge device for discharging a liquid to wet the processing target surface before removing a coating as the surface processing.

9. A laser processing method for surface processing by a laser light comprising:
a case installation step of installing a collecting case formed separate from a laser irradiation portion for irradiating a laser light to a processing target surface, the collecting case having an opening portion formed in its one side and a transparent panel provided to face the opening portion, wherein the processing target surface and the laser irradiation portion are separated by the collecting case and the surface processing becomes possible in which the laser light is irradiated to the processing target surface through the transparent panels from the laser irradiation portion by installing the collecting case in such a state that the opening portion is closed and the processing target surface is covered during surface processing on land; and
a surface processing step that after the case installation step, the surface processing is conducted and flying objects inside the collecting case is sucked.
